# EUROPÄISCHE PATENTANMELDUNG

(11) **EP 1 364 922 A1**
(43) Veröffentlichungstag der Anmeldung: **26.11.2003**
(21) Anmeldenummer: 02011233.0
(22) Anmeldetag: 22.05.2002
(51) Int. Cl.: C03C 17/32

(54) **Sonnen- und/oder Wärmeschutzglas sowie Verfahren zu dessen Herstellung**

(71) Anmelder: bin Fahad, Mubarak, Dubai, Karama (AE)
(72) Erfinder: Zibulka, Manfred, Dubai, Mirdif (AE); Haag, Frank, Dubai, Mirdif (AE)
(74) Vertreter: Stenger, Watzke & Ring Patentanwälte

(57) **Zusammenfassung**

Mit der Erfindung wird ein neuartiger Typ des Sonnen- und/oder Wärmeschutzglases sowie ein Verfahren zu dessen Herstellung angegeben. Das Glas weist mindestens ein flächiges Glaselement (2) sowie eine zumindest in einem Bereich einer Oberfläche des Glaselementes aufgebrachte Harzschicht (3) auf, wobei in der Harzschicht (3) strahlungsbeeinflussende Elemente (4) enthalten sind.

Das erfindungsgemäße Sonnen- und/oder Wärmeschutzglas läßt sich sehr einfach herstellen und es können mit ihm gleichzeitig sowohl gute Sonnenschutzeigenschaften als auch gute Wärmeschutzeigenschaften erzielt werden.

## Beschreibung

Die Erfindung betrifft ein Sonnen- und/oder Wärmeschutzglas sowie ein Verfahren zu dessen Herstellung.

Im Baubereich kommt der energiesparenden Auslegung der errichteten Gebäude eine immer größere Bedeutung zu. Energieaufwendungen für Heizung bzw. Klimatisierung der Gebäude können beispielsweise durch bereits beim Bauen vorgenommene Isoliermaßnahmen gering gehalten werden.

Da immer häufiger Gebäude mit Glasfassaden errichtet werden, kommt dem Werkstoff Glas in dieser Hinsicht eine große Bedeutung zu. Auch bei gewöhnlichen Gebäuden spielen Fensteröffnungen, durch die ein Energieaustausch mit der Umgebung stattfinden kann eine große Rolle.

Um einen Wärmeaustrag aus dem Gebäude durch Glaselemente hindurch zu verhindern, wurden sogenannte Wärmeschutzgläser entwickelt. Diese sind im Bereich der infraroten Wärmestrahlung nur geringfügig durchlässig, und verhindern somit einen Strahlungsaustrag von Wärme aus dem Gebäude. Die im Innern des Gebäudes auf das Glaselement auftreffende Wärmestrahlung wird dabei über Reflexion in den Raum zurückgeworfen.

Mit sogenannten Sonnenschutzgläsern wird einem weiteren Aspekt Rechnung getragen. Sonnenschutzgläser verhindern einen Eintrag von Sonnenlicht in das Innere des Gebäudes in bestimmten Wellenlängenbereichen des Sonnenlichts.

Um bei großen Glasfassaden eine übermäßige Erwärmung des Gebäudeinnern bei Sonnenschein zu vermeiden, werden diese Glasfassaden mit Sonnenschutzgläsern bestückt, welche insbesondere für Sonnenlicht im nahen Infrarotbereich im wesentlichen undurchlässig sind. Sonnenlicht in diesem Wellenlängenbereich wird nämlich beim Auftreffen auf in dem Inneren des Gebäudes befindliche Gegenstände zu langwelligerer Wärmestrahlung umgewandelt, es ergibt somit einen Wärmeeintrag in das Gebäude.

Für beide Arten der Gläser, Wärmeschutz- bzw. Sonnenschutzgläser werden Glasscheiben verwendet, welche mit sehr dünnen Beschichtungen, üblicherweise aus Metall oder Metalloxiden, versehen sind. Ein Verhindern des Durchtretens von Strahlung in bestimmten Wellenlängenbereichen durch das Fenster wird über dielektrische Effekte, insbesondere Reflexion erreicht. Zur Herstellung von Wärmeschutzgläsern ist es darüber hinaus üblich, zwei einzelne Glasscheiben unter Belassung eines Abstandes zu einer sogenannten Doppelverglasung zusammenzufügen, wobei in dem Raum zwischen den beiden Scheiben Luft belassen und/oder ein Edelgas eingeleitet ist. Die Metallbeschichtung bei Wärmeschutzgläsern besteht in der Regel aus einem Edelmetall, häufig Silber, oder Metalloxiden.

Auch für Sonnenschutzgläser werden Metallbeschichtungen gewählt, die die Wärmestrahlung der Sonne bzw. den nahen Infrarotbereich des Sonnenlichtes reflektieren. Auch für diese Metallbeschichtungen werden Edelmetalle wie Gold oder Silber bzw. Kupfer oder deren Oxide verwendet.

Die zur Herstellung der genannten Sonnen- bzw. Wärmeschutzgläser auf die Glasscheiben aufgebrachten dünnen Metallschichten werden dabei üblicherweise durch Sputtern, Bedampfen oder andere, verhältnismäßig aufwendige Beschichtungsmethoden abgeschieden.

Insbesondere ist es bei derartigen durch Beschichten gebildeten Spezialgläsern nicht möglich, die Wärmeschutzfunktion und die Sonnenschutzfunktion in ein und demselben Glas so zu kombinieren, daß sich sowohl ein effektiver Wärmeschutz als auch ein effektiver Sonnenschutz ergibt. Wird ein kombiniertes Wärme- und Sonnenschutzfenster auf einen optimalen Sonnenschutz hin ausgelegt, ergeben sich für dieses Fenster hohe k-Werte, welche ein Maß für den Wärmeaustrag sind. Hohe k-Werte (Werte von 1,6 oder mehr) stehen für schlechte Wärmeschutzeigenschaften. Wird andererseits ein Spezialglas durch Beschichten auf gute Wärmeschutzeigenschaften getrimmt, ergeben sich nur bedingte Sonnenschutzeigenschaften.

Ausgehend von diesem Stand der Technik liegt der Erfindung die **Aufgabe** zugrunde, ein Sonnen- und/oder Wärmeschutzglas anzugeben, welches gegenüber den bekannten Sonnen- bzw. Wärmeschutzgläsern einfacher herstellbar ist und mit welchem sich bei ein und demselben Glas sowohl hervorragende Sonnenschutz- als auch hervorragende Wärmeschutzeigenschaften erzielen lassen. Des weiteren soll ein Verfahren zur Herstellung eines solchen Sonnen- und/oder Wärmeschutzglases angegeben werden.

Zur vorrichtungsseitigen **Lösung** dieser Aufgabe wird mit der Erfindung ein Sonnen- und/oder Wärmeschutzglas mit mindestens einem flächigen Glaselement und einer zumindest in einem Bereich einer Oberfläche des Glaselementes aufgebrachten Harzschicht vorgeschlagen, wobei in der Harzschicht strahlungsbeeinflussende Elemente enthalten sind.

Im Gegensatz zum bekannten Stand der Technik, bei dem mittels auf ein Glaselement, beispielsweise eine Glasscheibe, aufgebrachter, dielektrisch wirksamer Metallbeschichtungen der Sonnen- und/oder Wärmeschutz bewirkt wird, wird bei dem Sonnen- und/oder Wärmeschutzglas der Erfindung ein gänzlich anderer Weg beschritten. Eine Harzschicht, in der strahlungsbeeinflussende Elemente enthalten sind, ersetzt die aufgedampfte oder aufgesputterte Metallschicht. Strahlungsbeeinflussende Elemente im Sinne der Erfindung sind solche Elemente, die auf den infraroten Anteil des Sonnenlichtes und/oder den sichtbaren Anteil des Sonnenlichtes und/oder eine Infrarotwärmestrahlung und/oder auf den ultravioletten Anteil des Sonnenlichts einen Einfluß ausüben, indem sie diese Strahlung absorbieren, reflektieren, polarisieren, zur Interferenz bringen oder auf sonstige Weise beeinflussen und/oder die Harzschicht, sowie die darin beinhalteten Zuschlagstoffe, reflektieren die auftreffende Infrarotstrahlung in der gleichen Wellenlänge, in der sie auf das Glas/die Beschichtung auftreffen.

Durch die Gleichheit der Wellenlängen heben sich die Strahlungen gegenseitig auf. Durch Wahl der in dem Harz enthaltenen Elemente kann der Bereich des elektromagnetischen Spektrums gewählt werden, in welchem die Beeinflussung stattfinden soll. Nach vorläufigen und noch nicht endgültig bestätigten Erkenntnissen und Überlegungen der Erfinder spielen bei dem Aufbau des Sonnen- und/oder Wärmeschutzglases der Erfindung Interferenzeffekte eine wesentliche Rolle. Je nach Auswahl der Elemente werden bestimmte Bereiche des Spektrums elektromagnetischer Strahlung durch Interferenzeffekte ausgelöscht, so daß sie beispielsweise zur Erzielung einer Sonnenschutzwirkung das Sonnenschutzglas nicht passieren können.

Neben den genannten Interferenzeffekten kommen jedoch auch Reflexionseffekte, Absorptionseffekte sowie Polarisierungseffekte zum Tragen. Die genaue Wirkweise der mit den strahlungsbeeinflussenden Elementen versehenen Harzschicht ist noch nicht abschließend ergründet und Gegenstand weiterer Untersuchungen.

Die strahlungsbeeinflussenden Elemente können beispielsweise Pigmente sein. Als strahlungsbeeinflussende Elemente kommen insbesondere Metalloxidpartikel bzw. Partikel von Oxiden von Elementen der vierten Nebengruppe in Betracht. Es wurde herausgefunden, daß mit den angesprochenen Elementen eingebettet in einem Harz Sonnen- und/oder Wärmeschutzgläser erhalten werden konnten, welche im Bereich des Wärmeschutzes hervorragende k-Werte mit bis zu 1,0 W/m²K erreicht werden können bei gleichzeitig hervorragenden Sonnenschutzeigenschaften.

Alternativ oder zusätzlich können als strahlungsbeeinflussende Elemente auch in die Harzmatrix eingebettete Partikel eines von dem Material des Harzes verschiedenen Kunststoffes verwendet werden. Auch für solche eingebetteten Kunststoffpartikel wurde je nach Art des verwendeten Kunststoffes eine gute Wärmeschutz- und/oder Sonnenschutzeigenschaft gefunden.

Als ein geeignetes Harz zur Bildung der Harzschicht hat sich Polyurethanharz erwiesen.

Zur Erzielung guter Sonnen- und/oder Wärmeschutzeigenschaften haben sich Schichtdicken der Harzschichten von zwischen 10 und 1000 µm als geeignet erwiesen.

Um eine feinere Abstimmung der Sonnen- und/oder Wärmeschutzeigenschaften des erfindungsgemäßen Glases zu erreichen, kann das Glas gemäß einer Weiterbildung in zumindest einem Bereich einer Oberfläche zwei oder mehr Harzschichten mit unterschiedlichen strahlungsbeeinflussenden Elementen aufweisen. So kann beispielsweise eine erste Harzschicht strahlungsbeeinflussende Elemente zur Erzeugung von Wärmeschutzeigenschaften und eine zweite Harzschicht strahlungsbeeinflussende Elemente zum Ausbilden von Sonnenschutzeigenschaften enthalten.

Neben den strahlungsbeeinflussenden Elementen kann die Harzschicht auch einfache Farbpigmente enthalten oder die strahlungsbeeinflussenden Elemente selbst können farbig sein, um eine Tönung des Sonnen- und/oder Wärmeschutzglases zu erreichen.

Zwei unterschiedliche Weiterbildungen der Erfindung sehen vor, daß bei dem Sonnen- und/oder Wärmeschutzglas die strahlungsbeeinflussenden Elemente in der Harzschicht entweder entlang einer Vorzugsrichtung ausgerichtet sind oder in der Harzschicht hinsichtlich ihrer Ausrichtung willkürlich verteilt sind. Je nach gewünschtem Effekt und verwendeten Elementen kann entweder eine Ausrichtung entlang einer Vorzugsrichtung oder eine willkürliche Anordnung der Elemente in der Harzmatrix von Vorteil sein.

Ein Wärmeschutz- und/oder Sonnenschutzglas gemäß der Erfindung ist nicht darauf beschränkt, daß lediglich auf einer seiner Oberflächen eine strahlungsbeeinflussende Elemente enthaltende Harzschicht angeordnet ist, es können auch beide Seiten des flächigen Glaselementes mit einer solchen Harzschicht versehen sein. Auf diese Weise können beiderseits des flächigen Glaselementes unterschiedliche Sonnen- und/oder Wärmeschutzeigenschaften ausgebildet werden, so daß das später verbaute Sonnen- und/oder Wärmeschutzglas auf seiner Außenseite andere Eigenschaften aufweist als auf seiner Innenseite.

Zur weiteren Verbesserung der Wärmeschutz- und/oder Sonnenschutzeigenschaften kann gemäß einer Weiterbildung der Erfindung das flächige, mit dem Harz versehene Glaselement mit einem weiteren flächigen Glaselement zu einem Mehrscheibenisolierglas zusammengefügt sein. Dabei kann zwischen den Glaselementen ein Zwischenraum belassen sein, welcher luftgefüllt ist oder in dem sich ein Edelgas, wie beispielsweise Argon oder Krypton, befindet. Bei einem solchen Mehrscheibenisolierglas können die einzelnen Glaselemente mit Vorteil so zusammengefügt sein, daß die mit Harz beschichteten Seiten aufeinander zuweisen. Auf diese Weise werden bei einem solchen Glasaufbau die beiden Harzschichten vor äußeren Einflüssen bewahrt.

Je nach Wahl des Harzes kann bei einem erfindungsgemäßen Sonnen- und/oder Wärmeschutzglas dieses Glas zudem als Sicherheitsglas ausgebildet sein.

Für das erfindungsgemäße Sonnen- und/oder Wärmeschutzglas, welches nach einem vom Stand der Technik abweichenden und neuen Prinzip aufgebaut ist, ist es durch einfache Auswahl und ggf. Mischung der strahlungsbeeinflussenden Elemente und ggf. Zugabe von Farbstoffen möglich, das Glas an eine mit dem Glas geplante Verwendung anzupassen. So werden an Glasbauelementen in den gemäßigten Breiten Mittel- und Nordeuropas andere Anforderungen gestellt als beispielsweise in Ländern des Nahen oder Mittleren Ostens. Wo in Nord- und Mitteleuropa die Glaselemente im sichtbaren Bereich des Sonnenlichtes möglichst durchlässig sein sollen, um eine intensive Beleuchtung der Innenräume zu schaffen, soll in Ländern des Nahen oder Mittleren Ostens ein hoher Anteil des Sonnenlichtes ausgefiltert werden, um in den Innenräumen eine verglichen mit dem in diesen Ländern vorherrschenden gleißenden Sonnenlicht angenehme Beleuchtung zu schaffen. Eine Anpassung auf die unterschiedlichen Bedürfnisse ist in einfacher Weise durch Auswahl und ggf. Zusammensetzung der in der Harzschicht eingebrachten strahlungsbeeinflussenden Elemente möglich.

Hinsichtlich des Verfahrens wird die Aufgabe der Erfindung **gelöst** durch ein Verfahren zum Herstellen eines Sonnen- und/oder Wärmeschutzglases, wobei auf ein flächiges Glaselement in zumindest einem Bereich einer Oberfläche ein strahlungsbeeinflussende Elemente enthaltendes Harz aufgebracht wird.

Mit diesem vergleichsweise einfachen und sehr flexiblen Herstellungsverfahren ist ein Sonnen- und/oder Wärmeschutzglas mit den oben genannten Vorteilen herstellbar.

Mit Vorteil können gemäß einer Weiterbildung der Erfindung die strahlungsbeeinflussenden Elemente vor dem Aufbringen des Harzes in dieses eingemischt werden und die Mischung aus Harz und strahlungsbeeinflussenden Elementen während des Vorganges des Aufbringens zumindest zeitweise durchmischt werden. Auf diese Weise wird eine gleichmäßige Verteilung der strahlungsbeeinflussenden Elemente in dem Harz erreicht und diese bis zum Aufbringen des Harzes auf das flächige Glaselement beibehalten. Somit ergibt sich eine optimale Verteilung der strahlungsbeeinflussenden Elemente in der Harzschicht und damit eine über die beschichtete Fläche des flächigen Glaselementes gleichbleibende Sonnenschutz- bzw. Wärmeschutzwirkung.

Als strahlungsbeeinflussende Elemente können dem Harz Pigmente zugegeben werden, es können jedoch auch strahlungsbeeinflussende Elemente verwendet werden, welche aus in die Harzmatrix eingebetteten Partikeln eines Kunststoffes, der von dem Material des Harzes verschieden ist, bestehen.

Um neben den Sonnen- bzw. Wärmeschutzeigenschaften einer Einfärbung des mit dem Verfahren herzustellenden Glases zu erreichen, können dem Harz des weiteren Farbpasten zugegeben werden.

Zum Aufbringen des Harzes auf das flächige Glaselement wird gemäß einer Weiterbildung der Erfindung vorgeschlagen, daß das strahlungsbeeinflussende Elemente enthaltende Harz in Form einer lösungsmittelhaltigen, fließfähigen Masse auf die Oberfläche des Glaselementes aufgebracht wird und durch Verflüchtigung des Lösungsmittels erhärtet. Um eine im wesentlichen gleichmäßige Verteilung auf der Oberfläche zu erzielen, kann das strahlungsbeeinflussende Elemente enthaltende Harz durch Bewegen des Glaselementes verteilt werden.

Schließlich ist für das erfindungsgemäße Verfahren vorgesehen, daß zur Festlegung weiterer Eigenschaften des Glases, wie Schallschluckeigenschaften oder Brucheigenschaften, das verwendete Harz in seinen Eigenschaften, insbesondere seiner Härte, entsprechend abgestimmt wird.

Im Rahmen einer solchen Abstimmung des Harzes kann beispielsweise ein vergleichsweise elastisches Harz gewählt werden, welches insbesondere bei Verwendung einer Verbundscheibe zu einer Verbesserung der Schallschutzeigenschaften des mit dem Verfahren herzustellenden Glases beiträgt. Darüber hinaus kann über die Wahl der Eigenschaften des Harzes das mit dem Verfahren hergestellte Sonnen- und/oder Wärmeschutzglas gleichzeitig zu einem Sicherheitsglas ausgebildet werden.

Weitere Vorteile und Merkmale der Erfindung ergeben sich aus dem nachfolgend anhand der beigefügten Zeichnung erläuterten Ausführungsbeispiel. In der Zeichnung zeigen:
- Figur 1: in geschnittener Ansicht ein erster Ausführungsbeispiel eines erfindungsgemäßen Wärmeschutz- und/oder Sonnenschutzglases,
- Figur 2: in geschnittener Ansicht ein zweites Ausführungsbeispiel eines erfindungsgemäßen Wärmeschutz- und/oder Sonnenschutzglasesund
- Figur 3: in geschnittener Ansicht ein drittes Ausführungsbeispiel eines erfindungsgemäßen Wärmeschutz- und/oder Sonnenschutzglases.

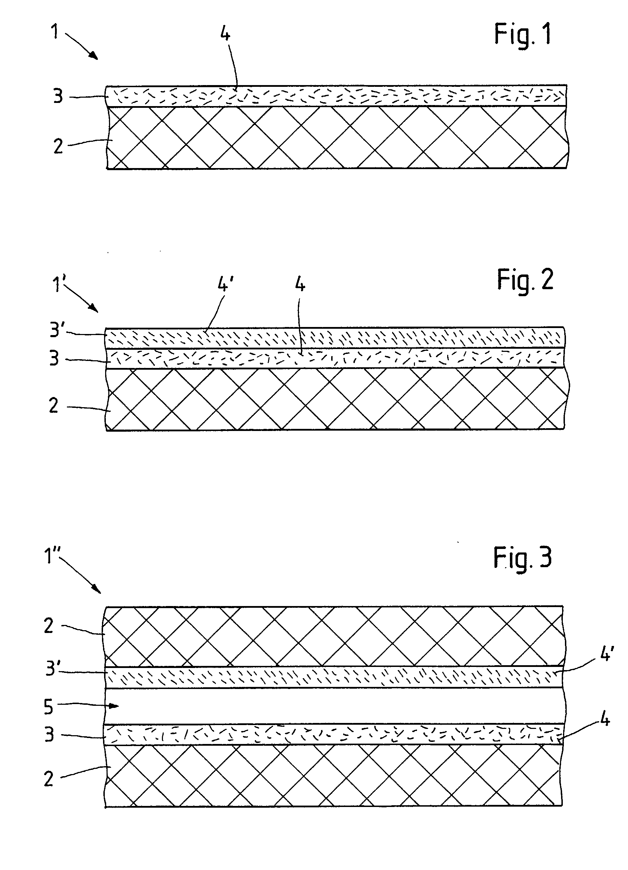

In Figur 1 ist ein erstes Ausführungsbeispiel eines erfindungsgemäßen Wärmeschutz- und/oder Sonnenschutzglases 1 gezeigt. Das Glas 1 setzt sich zusammen aus einem flächigen Glaselement 2 in Form einer Glasscheibe sowie einer einseitig darauf aufgebrachten Harzschicht 3. Die Harzschicht 3 enthält strahlungsbeeinflussende Elemente 4. In dem gezeigten Ausführungsbeispiel ist die Harzschicht 3 aus einem Polyurethanharz gebildet, die strahlungsbeeinflussenden Elemente 4 sind Metalloxidteilchen. Wie in der Figur zu erkennen, sind die strahlungsbeeinflussenden Elemente 4 in der Harzschicht gleichmäßig verteilt und hinsichtlich ihrer Ausrichtung willkürlich angeordnet.

In Figur 2 ist in einem zweiten Ausführungsbeispiel ein weiteres Wärmeschutzund/oder Sonnenschutzglas 1' gezeigt. Das Glas 1' setzt sich zusammen aus einem Glaselement 2 in Form einer Glasscheibe, einer ersten Harzschicht 3 mit darin eingebetteten strahlungsbeeinflussenden Elementen 4 und einer zweiten Harzschicht 3' mit darin eingebetteten strahlungsbeeinflussenden Elementen 4'. Die erste Harzschicht 3 sowie die darin eingebetteten strahlungsbeeinflussenden Elemente 4 gleichen dem in Figur 1 gezeigten Ausführungsbeispiel. In dem in Figur 2 gezeigten Ausführungsbeispiel ist auf die erste Harzschicht 3 eine weitere Harzschicht 3' aufgetragen, welche wiederum aus einem Polyurethanharz besteht. Die in der zweiten Harzschicht 3' eingebetteten strahlungsbeeinflussenden Elemente 4' sind Kunststoffelemente aus einem Material, welches von dem verwendeten Harz abweicht. Zu erkennen ist, daß die strahlungsbeeinflussenden Elemente 4' in der Harzschicht 3' gleichmäßig in dem Harz verteilt sind, im Unterschied zu den strahlungsbeeinflussenden Elementen 4 jedoch in ihrer Ausrichtung gleichmäßig ausgerichtet sind.

In Figur 3 ist schließlich ein weiteres Ausführungsbeispiel eines erfindungsgemäßen Wärmeschutz- und/oder Sonnenschutzglases 1" gezeigt. Bei diesem Glas handelt es sich um ein Mehrscheibenisolierglas, mit zwei Glaselementen 2, welche jeweils mit einer strahlungsbeeinflussende Elemente 4, 4' enthaltenden Harzschicht 3 bzw. 3' beschichtet sind. In dem gezeigten Ausführungsbeispiel sind die beschichteten Glaselemente 2 unter Belassung eines Zwischenraumes 5 angeordnet, wobei die Harzschicht 3 bzw. 3' der einzelnen Glaselemente 2 aufeinander zu weisen. Der Zwischenraum 5 ist mit einem Edelgas, vorliegend Argon, Krypton, SF6, einem Gasgemisch oder Luft gefüllt.

Mit allen gezeigten Ausführungsbeispielen lassen sich je nach Wahl der strahlungsbeeinflussenden Elemente 4, 4' hervorragende Sonnenschutz- bzw. Wärmeschutzeigenschaften erzielen, wobei auch eine Kombination der genannten Eigenschaften möglich ist. Bei einem kombinierten Sonnenschutz- und Wärmeschutzglas sind sowohl die Sonnenschutzeigenschaften als auch die Wärmeschutzeigenschaften des Glases exzellent.

### Bezugszeichenliste:

- 1: Wärme- und/oder Sonnenschutzglas
- 1': Wärme- und/oder Sonnenschutzglas
- 1": Wärme- und/oder Sonnenschutzglas
- 2: Glaselement
- 3: Harzschicht
- 3': Harzschicht
- 4: strahlungsbeeinflussendes Element
- 4': strahlungsbeeinflussendes Element
- 5: Zwischenraum

## Patentansprüche

1. Sonnen- und/oder Wärmeschutzglas mit mindestens einem flächigen Glaselement (2) und einer zumindest in einem Bereich einer Oberfläche des Glaselementes (2) aufgebrachten Harzschicht (3, 3'), wobei in der Harzschicht (3, 3') strahlungsbeeinflussende Elemente (4, 4') enthalten sind.

2. Glas nach Anspruch 1, **dadurch gekennzeichnet, daß** das Harz (3, 3') als strahlungsbeeinflussende Elemente (4, 4') Pigmente enthält.

3. Glas nach einem der voranstehenden Ansprüche, **dadurch gekennzeichnet, daß** das Harz (3, 3') als strahlungsbeeinflussende Elemente (4, 4') Metalloxidpartikel enthält.

4. Glas nach einem der voranstehenden Ansprüche, **dadurch gekennzeichnet, daß** das Harz (3, 3') als strahlungsbeeinflussende Elemente (4, 4') Partikel von Oxiden von Elementen der IV. Nebengruppe enthält.

5. Glas nach einem der voranstehenden Ansprüche, **dadurch gekennzeichnet, daß** das Harz (3, 3') als strahlungsbeeinflussende Elemente (4, 4') in die Harzmatrix eingebettete Partikel eines von dem Material des Harzes (3, 3') verschiedenen Kunststoffes enthält.

6. Glas nach einem der voranstehenden Ansprüche, **dadurch gekennzeichnet, daß** das Harz (3, 3') ein Polyurethanharz ist.

7. Glas nach einem der voranstehenden Ansprüche, **dadurch gekennzeichnet, daß** die Harzschicht (3, 3') eine Schichtdicke von zwischen 10 und 1000 um aufweist.

8. Glas nach einem der voranstehenden Ansprüche, **dadurch gekennzeichnet, daß** auf das Glaselement (2) in zumindest einem Bereich einer Oberfläche zwei oder mehr Harzschichten (3, 3') mit unterschiedlichen strahlungsbeeinflussenden Elementen (4, 4') aufgebracht sind.

9. Glas nach einem der voranstehenden Ansprüche, **dadurch gekennzeichnet, daß** die strahlungsbeeinflussenden Elemente (4, 4') in der Harzschicht (3, 3') entlang einer Vorzugsrichtung ausgerichtet sind.

10. Glas nach einem der Ansprüche 1 bis 8, **dadurch gekennzeichnet, daß** die strahlungsbeeinflussenden Elemente (4, 4') in der Harzschicht (3, 3') hinsichtlich ihrer Ausrichtung willkürlich verteilt sind.

11. Glas nach einem der voranstehenden Ansprüche, **dadurch gekennzeichnet, daß** auf den Oberflächen beider Seiten des flächigen Glaselementes (2) zumindest bereichsweise eine Harzschicht (3, 3') mit darin enthaltenen strahlungsbeeinflussenden Elemente (4, 4') aufgebracht ist.

12. Glas nach einem der voranstehenden Ansprüche, **dadurch gekennzeichnet, daß** das flächige, mit dem Harz (3, 3') versehene Glaselement (2) mit einem weiteren flächigen Glaselement zu einem Mehrscheibenisolierglas (1") zusammengefügt ist.

13. Glas nach Anspruch 12, **dadurch gekennzeichnet, daß** zur Bildung eines Mehrscheibenisolierglas (1") zwei einseitig mit einem strahlungsbeeinflussende Elemente (4, 4') enthaltenden Harz (3, 3') beschichtete, flächige Glaselemente (2) mit den beschichteten Seiten aufeinander zu weisend zusammengefügt sind.

14. Glas nach einem der Ansprüche 12 oder 13, **dadurch gekennzeichnet, daß** zwischen den Glaselementen (2) ein Zwischenraum (5) belassen ist, in dem ein Unterdruck herrscht und/oder in dem sich ein Edelgas, wie bspw. Argon oder Krypton, befindet.

15. Verfahren zum Herstellen eines Sonnen- und/oder Wärmeschutzglases, wobei auf ein flächiges Glaselement (2) in zumindest einem Bereich einer Oberfläche ein strahlungsbeeinflussende Elemente (4, 4') enthaltendes Harz (3, 3') aufgebracht wird.

16. Verfahren nach Anspruch 15, **dadurch gekennzeichnet, daß** die strahlungsbeeinflussenden (4, 4') Elemente vor dem Aufbringen des Harzes (3, 3') in dieses eingemischt werden und die Mischung aus Harz (3, 3') und strahlungsbeeinflussenden Elementen (4, 4') während des Vorganges des Aufbringens zumindest zeitweise durchmischt wird.

17. Verfahren nach einem der Ansprüche 15 oder 16, **dadurch gekennzeichnet, daß** dem Harz (3, 3') als strahlungsbeeinflussende Elemente (4, 4') Pigmente zugegeben werden.

18. Verfahren nach einem der Ansprüche 15 bis 17, **dadurch gekennzeichnet, daß** als strahlungsbeeinflussende Elemente (4, 4') in die Harzmatrix eingebettete Partikel eines Kunststoffes verwendet werden, der von dem Material des Harzes (3, 3') verschieden ist.

19. Verfahren nach einem der Ansprüche 15 bis 18, **dadurch gekennzeichnet, daß** dem Harz (3, 3') Farbpasten zugegeben werden.

20. Verfahren nach einem der Ansprüche 15 bis 19, **dadurch gekennzeichnet, daß** das strahlungsbeeinflussende Elemente (4, 4') enthaltende Harz (3, 3') in Form einer lösungsmittelhaltigen, fließfähigen Masse auf die Oberfläche des Glaselementes (2) aufgebracht wird und durch Verflüchtigung des Lösungsmittels erhärtet.

21. Verfahren nach Anspruch 20, **dadurch gekennzeichnet, daß** das strahlungsbeeinflussende Elemente (4, 4') enthaltende Harz (3, 3') durch Bewegen des Glaselementes (2) im wesentlichen gleichmäßig auf der Oberfläche verteilt wird.

22. Verfahren nach einem der Ansprüche 15 bis 21, **dadurch gekennzeichnet, daß** zur Festlegung weiterer Eigenschaften des Glases (1, 1', 1"), wie Schallschluckeigenschaften oder Brucheigenschaften, das verwendete Harz (3, 3') in seinen Eigenschaften, wie insbesondere seiner Härte, entsprechend abgestimmt wird.
